# EUROPÄISCHE PATENTSCHRIFT

(11) **EP 2 928 690 B1**
(45) Veröffentlichungstag und Bekanntmachung des Hinweises auf die Patenterteilung: **12.12.2018**
(21) Anmeldenummer: 13821074.5
(22) Anmeldetag: 26.11.2013
(51) Int. Cl.: B32B 17/10, C03C 1/00, C03C 17/00

(54) **SUBSTRAT MIT EINER SEMITRANSPARENTEN BESCHICHTUNG**
SUBSTRATE WITH A SEMI-TRANSPARENT COATING
SUBSTRAT MUNI D'UN REVÊTEMENT SEMI-TRANSPARENT

(30) Priorität: 05.12.2012 DE 102012111836
(43) Veröffentlichungstag der Anmeldung: 14.10.2015
(73) Patentinhaber: SCHOTT AG, 55122 Mainz (DE)
(72) Erfinder: METZ, Stephanie, 55130 Laubenheim (DE); BOCKMEYER, Matthias, 55116 Mainz (DE); GABRIEL, Annelie, 55270 Klein-Winternheim (DE); ANTON, Andrea, 55595 Hüfflesheim (DE); SCHMITT, Hans-Joachim, 55437 Ockenheim (DE); KRANZ, Maximilian, 55296 Harxheim (DE)
(74) Vertreter: Herrmann, Jochen
(86) Internationale Anmeldenummer: PCT/EP2013/074724
(87) Internationale Veröffentlichungsnummer: WO 2014/086619

(56) Entgegenhaltungen:
- EP-A1- 1 288 270
- EP-A1- 2 412 846
- EP-A1- 2 484 732
- DE-A1-102010 031 866
- JP-A- S 646 354
- US-B1- 6 342 762

## Beschreibung

Die Erfindung betrifft ein Substrat mit einer semitransparenten Beschichtung.

Die vorliegende Erfindung beschreibt ein Beschichtungsmaterial, das zur Beschichtung von transparentem Glas oder Glaskeramik, besonders bevorzugt einer Glas- oder Glaskeramikkochfläche dient. Mithin kann das Beschichtungsmaterial gemäß der Erfindung ein druckbarer Werkstoff, beispielsweise eine Siebdruckpaste sein. Beschichtungsmaterial im Sinne der Erfindung kann auch ein auf dem Substrat anhaftender Aufdruck, beispielsweise die Beschichtung selbst sein.

Aus dem Stand der Technik sind semitransparente Beschichtungen auf Glas und Glaskeramik bekannt, die beispielsweise in Anzeigenbereichen bei Kochflächen eingesetzt werden. Insbesondere im Bereich von Kochfeldern werden 7-SegmentAnzeigen verwendet, welche bspw. die Heizstufe widergeben oder durch einen Punkt kennzeichnen, welche Kochzonen höhere Temperaturen aufweisen.

Da die hierfür verwendete Glaskeramik, bedingt durch den Herstellungsprozess, Noppen auf der Unterseite aufweist und daher das Licht auf unterschiedliche Weise bricht, ist die 7-Segment-Anzeige nicht ausreichend konturenscharf.

Aufgrund einer Vielfalt an möglichen Farbeindrücken und Designs hat sich in den letzten Jahren die Verwendung von transparenter Glaskeramik für Kochflächen etabliert. Diese weist keine Noppen auf der Unterseite und daher keine Streuung auf. Die transparente Glaskeramik hat jedoch den Nachteil, dass die Bauteile unterhalb der Kochfläche sichtbar sind. Um eine entsprechende Blickdichte zu gewährleisten, kann die Glaskeramik, wie aus dem Stand der Technik bekannt, mit unterschiedlichsten Beschichtungen versehen werden. In der Regel wird die Glaskeramik zunächst mit einer farbgebenden Schicht und anschließend mit einer Versiegelungsschicht versehen.

Um die Sichtbarkeit eines Displays, welches unter der Kochfläche angebracht ist, zu gewährleisten, bedarf es in diesem Bereich einer semitransparenten Beschichtung. Hierfür wird eine semitransparente Beschichtung benötigt, welche eine ausreichende Blickdichte gewährleistet, jedoch das beispielsweise rote Licht der 7-Segment-Anzeige durchlässt und im sichtbaren Wellenlängenbereich keine Streuzentren aufweist.

Da die semitransparente Beschichtung auf den benachbarten Schichtverbund aus farbgebender Schicht und Versiegelungsschicht gedruckt werden soll und nur den ausgesparten Displaybereich füllen soll, müssen diese kompatibel sein, d.h. die semitransparente Beschichtung muss auf dem bereits gedruckten Schichtverbund gut anhaften.

Aus dem Stand der Technik sind semitransparente Beschichtungen auf Basis von farbgebenden Pigmenten bekannt. Diese Beschichtungen weisen ein hohes Lichtabsorptionsvermögen, aber zeitgleich eine große Streuung auf.

Weiterhin sind semitransparente Beschichtungen auf Basis organisch gebundener Edelmetalle bekannt, welche keine Streuung aufweisen. Allerdings sind diese Beschichtungen aufgrund der hohen Rohstoffpreise der Edelmetalle sehr teuer.

Es ist Aufgabe der Erfindung, ein Substrat mit einer aufgedruckten Beschichtung bereitzustellen, wobei die Beschichtung semitransparent ist, eine hohe Kratzfestigkeit, Temperaturbeständigkeit und eine gute Anhaftung auf einer Versiegelungsschicht aufweist.

Die Aufgabe wird dadurch gelöst, dass die semitransparente Beschichtung des Substrats von einem Beschichtungsmaterial gebildet ist, das eine Sol-Gel-Matrix sowie Farbstoffe, aufweist. Weiterhin sind polyester- und/oder epoxyfunktionalisierte Silikonharze, beispielsweise polyestermodifizierte Silikonharze vorgesehen. Die Beschichtung ist auf ein teiltransparentes Substrat, nämlich auf ein Glas oder eine Glaskeramik aufgebracht.

Als Sol-Gel-Ausgangsstoffe für die Sol-Gel-Matrix werden bevorzugt Metallalkoholate verwendet, bevorzugt in Form von Alkoxysilanen. Diese können als Standardware kostengünstig bezogen werden. Bevorzugt wird immer ein Tetraalkoxysilan, z. B. Tetraethoxysilan (TEOS) in Kombination mit einem Trialkoxysilan, welches eine organisch vernetzbare Funktionalität besitzt, eingesetzt. Zusätzlich bewirken diese Stoffe einen geringen Schrumpf bei Erwärmung, sodass sich eine gute Anhaftung auf der Substratoberfläche ergibt. Um eine hohe Vernetzung innerhalb der hybridpolymeren Sol-Gel Matrix zu gewährleisten, werden u. a. Alkoxysilane mit folgenden Funktionalitäten eingesetzt: Epoxy-, Acrylat-, Methacrylat-, Vinyl- oder Allylsilane. Dabei können je nach Einstellung der Reste stabile oder flexible Netzstrukturen aufgebaut werden. Geeignet sind beispielsweise Glycidoxypropyltriethoxysilan (GPTES), Methacryloxypropyltrimethoxysilan (MEMO oder MPTMS), Methacryloxypropyltriethoxysilan (MPTES) oder Vinyltriethoxysilan (VTES).

Die Sol-Gel-Matrix wird in Form eines Hydrolysates hergestellt. Die Herstellung des Hydrolysates erfolgt durch die gezielte Umsetzung der Monomere mit Wasser. Bevorzugt wird dies in Gegenwart eines Katalysators, insbesondere einer Säure durchgeführt (z. B. HCl, para-Toluolsulfonsäure).

In einer speziellen Ausführungsform erfolgt die Hydrolyse mit einer wässrigen Nanopartikeldispersion. Durch den Einsatz von anorganischen Nanopartikeln, vorzugsweise SiO₂-Nanopartikeln wird die Kratzbeständigkeit verbessert.

Der anorganische Vernetzungsgrad des Hydrolysates wird über das Verhältnis Wasser zu Monomeren eingestellt, der anorganische Vernetzungsgrad liegt dabei bevorzugt zwischen 11 und 50 %.Dabei wird eine ausreichende Flexibilität für eine organische Vernetzung geboten. Besonders bevorzugt liegt der anorganische Vernetzungsgrad zwischen 15 und 35 %. Da die Sol-Gel-Matrix hierbei noch nicht vollständig durchgegelt ist, ergibt sich dann eine gute Haltbarkeit. Das Beschichtungsmaterial ist über mehrere Jahre stabil. Der anorganische Vernetzungsgrad wird über ²⁹Si-NMR Spektroskopie bestimmt. Die Viskosität des Hydrolysates liegt bei 200-1.000 mPas. Bei dieser Viskosität ist der anorganische Vernetzungsgrad gering, sodass die organische Vernetzung ausreichend sichergestellt werden kann. Gute Haltbarkeiten der gedruckten Beschichtung ergeben sich zusätzlich dann, wenn die Viskosität im Bereich zwischen 250-600 mPas gewählt ist. Der Restlösungsmittelgehalt des Hydrolysates liegt bevorzugt unter 10 % um bei Verwendung als Siebdruckpaste eine gute Druckfähigkeit zu erhalten.

Durch Zugabe von einem oder mehreren polyestermodifizierten Silikonharzen kann eine gute Anhaftung der semitransparenten Beschichtung auf der Versiegelungsschicht und gleichzeitig eine Verbesserung der Siebdruckfähigkeit erzielt werden. Als polyestermodifizierte Silikonharze können bspw. SILIKOFTAL®e verwendet werden. Weiterhin können dem Hydrolysat weitere Silikonharze wie bspw. SILIKOPHEN® zugegeben werden.

Zum Einfärben der Schicht können verschiedene Farbmittel verwendet werden, welche eine blickdichte Beschichtung mit geringer Streuung gewährleisten.

So können dem Bindemittel organische Farbstoffe, wie bspw. Orasole zugegeben werden. Für eine dunkle bzw. schwarze Beschichtung kann bevorzugt Orasol RLi verwendet werden. Als temperaturbeständige Farbstoffe eignen sich weiterhin Azofarbstoffe wie Methylorange, Alizaringelb oder Kongorot; Triphenylmethanfarbstoffe wie Malachitgrün, Eosin, Fluoreszein, Aurin und Phenolthalein; Küpenfarbstoffe wie Anthrachinon-Farbstoffe, Indigo und Thioindigo; Fluoreszenzfarbstoffe; Perylenfarbstoffe
Ebenfalls können Phthalocyanine mit z.B. Cr, Cu, Ni, Zn oder Co als Zentralatom zum Einsatz kommen. Diese Farbstoffe sind für die Anwendung im Bereich der Bedruckung eines Glaskeramik-Kochfeldes besonders geeignet. Insbesondere sind diese Farbstoffe bis 150°C ausreichend temperaturbeständig.

Als Lösungsmittel können hochsiedende Lösungsmittel mit einem Dampfdruck von < 5 bar, bevorzugt < 1 bar, besonders bevorzugt < 0,1 bar eingesetzt werden. Es werden bevorzugt Lösungsmittel zugesetzt, welche einen Siedepunkt von mehr als 120°C und eine Verdunstungszahl von >10 haben. Vorzugsweise wird ein Lösungsmittel mit einem Siedepunkt über 150°C und einer Verdunstungszahl von >500, besonders bevorzugt mit einem Siedepunkt über 200°C und einer Verdunstungszahl von >1000 verwendet. Derartige hoch siedende Lösungsmittel sind insbesondere Glykole und Glykolether, Terpene und Polyole, sowie Mischungen aus mehreren dieser Lösungsmittel. Es können Butylacetat, Methoxybutylacetat, Butyldiglykol, Butyldiglykolacetat, Butylglykol, Butylglykolacetat, Cyclohexanon, Diacetonalkohol, Diethylenglykol, Dipropylenglykolmonomethylether, Dipropylenglykolmonobuthylether, Propylenglykolmonobutylether, Propylenglykolmonopropylether, Propylenglykolmonoethylether, Ethoxypropylacetat, Hexanol, Methoxypropylacetat, Monoethylenglykol, Ethylpyrrolidon, Methylpyrrolidon, Dipropylenglykoldimethylether, Propylenglykol, Propylenglykolmonomethylether, Gemische aus parafinischen und naphthenischen Kohlenwasserstoffen, aromatische Kohlenwasserstoffgemische, Mischungen aromatischer alkylkierter Hydrocarbone und Gemische von n-, i- und cycloAliphaten als Lösungsmittel verwendet werden. Insbesondere können Polyethylenglykolether, wie beispielsweise Diethylenglykolmonoethylether, Tripropylenglykolmonomethylether und Terpineol als Lösungsmittel verwendet werden. Auch die Verwendung von Lösungsmittelgemischen ist möglich.Hierbei können die Lösungsmittel sowohl der Sol-Gel-basierten Matrix als auch dem Beschichtungsmaterial zugegeben werden.

Die Verwendung eines hochsiedenden Lösungsmittels gewährleistet die Siebdruckfähigkeit des semitransparenten Beschichtungsmaterials.

Die erfindungsgemäße semitransparente Beschichtung ist schon bei niedrigen Temperaturen zwischen 100 °C und 230 °C, bevorzugt zwischen 150 °C und 200 °C aushärtbar. Bei Temperaturen unter 230°C ist garantiert, dass die empfindlichen Farbstoffe nicht zerstört werden. Bei der Verwendung von vorgespannten Glassubstraten im Schichtpaket wird durch die niedrige Aushärtetemperatur der Versiegelungsschicht gewährleistet, dass sich das vorgespannte Glassubstrat nicht entspannt. Die Aushärtezeit der semitransparenten Beschichtung liegt zwischen 15 und 120 min, im Speziellen bevorzugt unter 75 min, besonders bevorzugt unter 60 min. Dies gewährleistet eine hohe Taktzeit in Produktionsanlagen und hat somit einen direkten positiven Einfluss auf die Herstellungskosten eines Produktes.

Der anorganische Vernetzungsgrad der Schichten liegt bei 11 % - 40 %, bevorzugt bei 15 - 35 %. Die Bestimmung des anorganischen Vernetzungsgrades kann dabei über die dem Fachmann bekannte Methode der NMR-Spektroskopie erfolgen.

Um die Vernetzungsreaktion der organischen funktionellen Gruppen zu starten, können der Beschichtungslösung thermisch aktivierbare Starter zugegeben sein. Dies können beispielsweise 1,5-Diazobicyclo(4.3.0)non-5-ene, Aluminiumacetylacetonat oder Methylimidazol sein.

Auch können der Beschichtungslösung UV-aktivierbare Starter für kationische oder radikalische Polymerisation wie Triarylsulphoniumsalze, Diaryliodiniumsalze (z.B. Irgacure 250), Ferroceniumsalze, Benzoinderivate, α-Hydroxyalkylphenone (z.B. Irgacure 184), α-Aminoacetophenone (z.B. 2-Methyl-1[4-(methylthio)phenyl]-2-morpholinopropanone) oder Acylphosphinoxide (z.B. Irgacure 819) beispielsweise zugegeben werden.

Um die Kratzbeständigkeit zu erhöhen, können dem Beschichtungsmaterial Bisepoxid, Bismethacrylat oder dergleichen organische Härter oder Vernetzer mit mehreren organischen vernetzbaren Gruppen zugegeben sein.
Das molare Verhältnis von vernetzbaren organischen Silanen zu Monomer des eingesetzten Härters oder Vernetzers kann 35:1 - 10:1. Dabei kann ein Gradt der organischen Vernetzung erreicht werden, bei dem Flexibilität und Härte der Beschichtung ausgewogen sind. Für eine schnelle Aushärtung kann das molare Verhältnis bevorzugt 25:1 - 15:1, betragen. Der Härter oder Vernetzer kann dabei z.B. das (3,4-Epoxycyclomethyl)3,4epoxycyclohexanecarboxylate sein.

Je nach Beschichtungsverfahren können auch noch verschiedene Verlaufsmittel, Entschäumer, Entlüfter oder Dispergierungsadditive wie beispielsweise PEG, BYK 302, BYK 306, BYK 307, DC11, DC57 oder Airex 931 bzw. Airex 930 zugegeben werden, um homogene Schichtdicken und eine homogene Farbverteilung der Beschichtung zu erreichen.
In einer besonderen erfindungsgemäßen Ausführungsform können der Beschichtung Haftvermittler zugegeben werden. Dies können bspw. Amino-und/oder Mercaptosilane sein, bspw. kann dies 3-Aminopropyltriethoxysilan oder 3-Mercaptopropyltriethoxysilan sein. Der Anteil der Haftvermittlersilane kann dabei bzgl. der weiteren Alkoxysilane zwischen 1:100 bis 1:10, bevorzugt 1:50 bis 1:15 sein.

Das Beschichtungsmaterial kann durch ein Druckverfahren aufgebracht werden. Dieses Druckverfahren kann ein Ink-Jet-Druck-, Off-Set-Druck-, Tampon-Druck-, Rollcoating-, Tauch-, Spin-Coating- oder Sprüh-Verfahren sein. Bevorzugt wird das Beschichtungsmaterial mittels Siebdruck auf das Substrat aufgebracht.

Erfindungsgemäß sind als Substrat Glas oder Glaskeramik verwendet. Besonders bevorzugt wird Glaskeramik als Substrat verwendet. Das Substrat kann auch vorbeschichtet sein.

Bevorzugt wird eine LAS (Lithium-Aluminium-Silikat-Glaskeramik: Li₂O-Al₂O₃-SiO₂) mit Hochquarz-Mischkristallen und/oder Keatit-Mischkristallen als vorherrschende Kristallphase verwendet. Bevorzugt werden LAS-Glaskeramiken mit TiO₂ und/oder ZrO₂ und oder SnO₂ als Keimbildner verwendet.

Die verwendeten Substrate enthalten bevorzugt weniger als 1000 ppm, besonders bevorzugt weniger als 500 ppm, ganz besonders bevorzugt weniger als 200 ppm Arsen und/oder Antimon. In einer Ausführungsform ist die verwendete transparente Glaskeramik Arsen- und Antimonfrei.

Der Kristallphasengehalt der Glaskeramikscheiben beträgt bevorzugt 50 - 85 %, besonders bevorzugt 60 - 80 %, ganz besonders 64 - 77 %.

Die bevorzugte Dicke der Glaskeramikscheibe zur Erzielung der notwendigen Festigkeitswerte beträgt 0,8 - 6 mm, bevorzugt 2,5 - 5 mm, besonders bevorzugt 3,5 - 4,5 mm.

Gemäß der Erfindung kann das semitransparente Beschichtungsmaterial als siebdruckfähiger ein- oder mehrkomponentiger, insbesondere als 2-Komponenten-Lack auf Basis von Hybridpolymeren aus einer Mischung einer ersten und einer zweiten Komponentenmischung hergestellt, wobei der Sol-Gel-Binder sowie die restlichen vernetzenden Komponenten getrennt vom Starter vorliegen.

Die organischen Farbstoffe können dabei sowohl zur ersten als auch zur zweiten Komponente zugegeben werden.

Die Kratzfestigkeit der Schichten liegt bei ≥ 400 g. Die Bestimmung der Kratzfestigkeit erfolgte mit einem Scratch Hardness Tester 413 der Firma Erichsen. Als Messspitze wurde eine Wolframcarbid-Spitze mit einem Durchmesser von 1 mm verwendet.

Die Viskosität der dunklen semitransparenten Farbe, insbesondere das Thixotropieverhalten für Siebdruckverfahren, kann vor dem Drucken über den Lösungsmittelgehalt, den Gehalt an polyestermodifiziertem Silikonharz oder durch Variation von Additiven an das ausgewählte Druckverfahren angepasst werden. Die Viskosität von erfindungsgemäßen siebdruckfähigen Lacken liegt bevorzugt bei 200 mPa*s - 1000 mPa*s, besonders bevorzugt bei 250 - 600 mPa*s.

Die mittleren Schichtdicken der insbesondere dunklen semitransparenten Beschichtung liegen im Bereich zwischen 1 und 20 µm, bevorzugt zwischen 4 und 10 µm, besonders bevorzugt zwischen 4 und 8 µm. Schichtdicken im Bereich zwischen 4 und 10 µm lassen sich ohne weiteres mit gängigen Farbstoffen erreichen, wobei Schichtdicken im Bereich zwischen 4 und 7 µm mit Farbstoffen mit hoher Lichtdurchlässigkeit erreicht werden (besonders geeignet für LED-Anwendung).

Die Transmission der erfindungsgemäßen Beschichtung kann im Wellenlängenbereich von 380-630 nm zwischen 0-20 %, bevorzugt zwischen 0-10 % liegen. Dabei können dann handelsübliche LEDs mit ausreichend hoher Lichtausbeute auf der Anzeigeseite eingesetzt werden. Im Wellenlängenbereich von 630-790 nm steigt die Transmission der dunklen Beschichtung auf bis zu 90 % an.

Die LAB-Werte der dunklen semitransparenten Beschichtung liegen im Bereich von L= 22-27, a= -1,0 bis 1,0, b= -2,0 bis -0,5.

Die LAB-Werte der hellen semitransparenten Beschichtung liegen im Bereich von L= 60-90, a= -1,5 bis -1,0, b= 5,0 bis 8,0.

Prinzipiell ist es erfindungsgemäß möglich, durch eine gezielte Wahl des Farbmittels und Einarbeitung dieses Farbmittels in den Sol-Gel-Binder und anschließende Beschichtung eines Substrats mit der Sol-Gel-Farbe quasi jeden Farbort zu generieren.

Die Streuung innerhalb der dunklen semitransparenten Beschichtung liegt im Bereich von 0-3,5 %, bevorzugt 0-2,5 %. Die Streuung innerhalb der hellen semitransparenten Beschichtung liegt im Bereich von 5-85 %, bevorzugt 10-75 %.

Diese Werte werden mit einer dem Fachmann bekannten Haze-Messung bestimmt.

### Ausführungsbeispiel 1 (1-Komponentensystem):

Es werden 0,08 mol GPTES (Glycidyloxypropyltriethoxysilan) und 0,02 mol TEOS (Tetraethoxysilan) mit 0,02 mol para-Toluolsulfonsäure versetztem Wasser hydrolysiert.

Anschließend wird das Lösungsmittel am Rotationsverdampfer entfernt und 23,0 g Binder erhalten.

23,0 g dieses Binders werden 12,5 g polyestermodifiziertes Silikon Silikoftal HTT, 0,50 g Silikonepoxidharz Silikopon EF, 4,60 g (3,4-Epoxycyclomethyl)3,4-epoxycyclo-hexan-carboxylat, 5,00 g Farbstoff Orasol RLI, 0,50 g Airex 931, 0,10 g BYK 307 und 0,20 g DC11 zugegeben.

Die Lösung wird 5 min im Speedmixer gerührt.

Nach vollständiger Vermischung der Lösung wird mittels Siebdruck mit einem 180er Sieb eine 3-5 µm dicke Schicht auf eine transparente Glaskeramik aufgebracht. Diese Schicht wird 1 h bei 170 °C ausgehärtet.

### Ausführungsbeispiel 2 (2-Komponentensysystem):

### 1. Komponente

Es werden 0,08 mol GPTES (Glycidyloxypropyltriethoxysilan) und 0,02 mol TEOS (Tetraethoxysilan) mit 0,02 mol para-Toluolsulfonsäure versetztem Wasser hydrolysiert. Anschließend wird das Lösungsmittel am Rotationsverdampfer entfernt und 23,0 g Binder erhalten.

23,0 g dieses Binders werden 4,60 g (3,4-Epoxycyclomethyl)3,4-epoxycyclo-hexancarboxylat, 5,00 g Farbstoff Orasol RLI, 0,50 g Airex 931, 23,0 g Diethylenglykolmonoethylether, 0,10 g BYK 307 und 0,20 g DC11 zugegeben. Die Lösung wird 5 min im Speedmixer gerührt.

### 2. Komponente

12,5 g Silikonpolyesterharz Silikoftal HTT, 0,50 g Silikonepoxidharz Silikopon EF und 4,90 g Methylimidazol werden vermischt und 10 Minuten gerührt.

Vor Aufbringen der Farbe auf das Substrat werden beide Komponenten 5 Minuten unter starkem Rühren vermischt. Mittels Siebdruck mit einem 180er Sieb wird eine 3-5 µm dicke Schicht auf eine transparente Glaskeramik aufgebracht. Diese Schicht wird 1 h bei 170 °C ausgehärtet.

### Ausführungbeispispel 3 (2-Komponentensytem):

### 1. Komponente

Es werden 0,08 mol GPTES (Glycidyloxypropyltriethoxysilan) und 0,02 mol TEOS (Tetraethoxysilan) mit 0,02 mol para-Toluolsulfonsäure versetztem Wasser hydrolysiert. Anschließend wird das Lösungsmittel am Rotationsverdampfer entfernt und 23,0 g Binder erhalten.

23,0 g dieses Binders werden 12,5 g Silikonpolyesterharz Silikoftal HTT, 0,50 g Silikonepoxidharz Silikopon EF , 4,60 g (3,4-Epoxycyclomethyl)3,4-epoxycyclo-hexancarboxylat, 5,00 g Farbstoff Orasol RLI, 0,50 g Airex 931, 23,0 g Diethylenglykolmonoethylether, 0,10 g BYK 307 und 0,20 g DC11 zugegeben. Die Lösung wird 5 min im Speedmixer gerührt.

### 2. Komponente

### 4,90 g Methylimidazol

Vor Aufbringen der Farbe auf das Substrat werden beide Komponenten 5 Minuten unter starkem Rühren vermischt. Mittels Siebdruck mit einem 180er Sieb wird eine 3-5 µm dicke Schicht auf eine transparente Glaskeramik aufgebracht. Diese Schicht wird 1 h bei 170 °C ausgehärtet.

### Ausführungsbeispiel 4:

Anstelle des in dem Ausführungsbeispiel 1, 2 und 3 eingesetzten Farbstoffes Orasol RLi werden im Ausführungsbeispiel 4 4,00 g Orasol RLI und 1,00 g Orasol gelb eingesetzt.

### Ausführungbeispiel 5 & 6:

Anstelle des in dem Ausführungsbeispiel 1, 2 und 3 eingesetzten Silikonpolyesterharzes Silikoftal HTT wird im Ausführungsbeispiel 5 Silikoftal HTL und im Ausführungsbeispiel 6 Silikoftal HTL-2 eingesetzt.

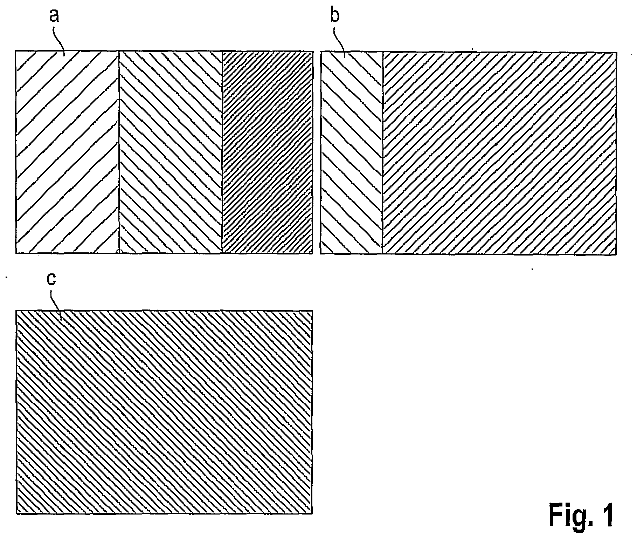

In der anliegenden Figur 1 ist eine Rasterelektronenmikroskop-Aufnahme einer mit Orasol RLI eingefärbten semitransparenten Beschichtung auf Glaskeramik mit einer mittleren Schichtdicke von 5 µm gezeigt. Der in der Skizze mit a bezeichnete Bereich zeigt eine 20.000-fache, der mit b bezeichnete eine 50,000-fache und der mit c bezeichnete eine 200.000-fache Vergrößerung.

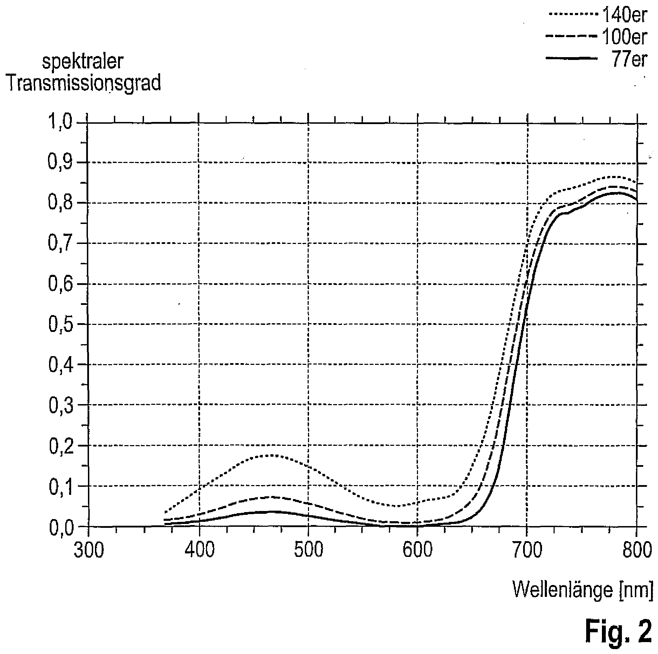

In Figur 2 ist die Transmission einer mit Orasol RLI eingefärbten semitransparenten Beschichtung auf einer Glaskeramik in Abhängigkeit von der verwendeten Siebstärke einer Siebdruckvorrichtung gezeigt. Dabei ist ein 77er, ein 100er und ein 140er Sieb dargestellt.

## Patentansprüche

1. Substrat mit einer semitransparenten Beschichtung, die von einem Beschichtungsmaterial gebildet ist,
wobei das Substrat zumindest teiltransparent ist und aus Glas oder Glaskeramik besteht,
wobei das Beschichtungsmaterial eine Sol-Gel-Matrix, Farbstoffe und polyester- und/oder epoxyfunktionalisierte Silikonharze, insbesondere ein polyestermodifiziertes Silikonharz aufweist, und wobei die optische Streuung der Beschichtung im Bereich zwischen 0 - 3,5 %, beträgt.

2. Substrat nach Anspruch 1,
**dadurch gekennzeichnet,**
**dass** als Precursor für die Sol-Gel Matrix ein Metallalkoholat, vorzugsweise in Form von Alkoxysilanen, besonders bevorzugt ein Tetraalkoxysilan verwendet wird.

3. Substrat nach Anspruch 2,
**dadurch gekennzeichnet,**
**dass** als Precursoren für die Sol-Gel-Matrix eine Mischung aus Tetraethoxysilan und Trialkoxysilan verwendet wird.

4. Substrat nach einem der Ansprüche 1 bis 3,
**dadurch gekennzeichnet,**
**dass** das Alkoxysilan eine organisch vernetzbare Funktionalität, nämlich Epoxy-, Acrylat-, Methacrylat-, Vinyl- und/oder Allylsilan aufweist.

5. Substrat nach einem der Ansprüche 1 bis 4,
**dadurch gekennzeichnet,**
**dass** als Farbstoffe Orasol, insbesondere Orasol RLi, Azofarbstoffe, insbesondere Methylorange, Alizaringelb oder Kongorot, Triphenylmethanfarbstoff, insbesondere Malachitgrün, Eosin, Fluoreszin, Aurin, Phenolthalein, Küpenfarbstoff, insbesondere Anthrachinon-Farbstoffe, Indigo und Thioindigo, Fluoreszenfarbstoff, Perylenfarbstoff und/oder Phthalocyanin verwendet sind.

6. Substrat nach einem der Ansprüche 1 bis 5,
**dadurch gekennzeichnet,**
**dass** es organische Härter und/oder Vernetzer aufweist, die mehrere organisch vernetzbare Gruppen aufweisen, wobei bevorzugt Bisepoxid und/oder Bismethacrylat verwendet ist.

7. Substrat nach einem der Ansprüche 1 bis 6,
**dadurch gekennzeichnet,**
**dass** das molare Verhältnis von vernetzbarem organischen Silanen zu Monomer des Härters oder Vernetzers im Bereich zwischen 35:1 bis 10:1, bevorzugt 25:1 bis 15:1 beträgt.

8. Substrat nach einem der Ansprüche 1 bis 7,
**dadurch gekennzeichnet,**
**dass** der Sol-Gel-Anteil eine anorganische und eine organische Vernetzung aufweist.

9. Substrat nach einem der Ansprüche 1 bis 8,
**dadurch gekennzeichnet,**
**dass** die Silikonharze mit Halogenen und /oder organischen Gruppen funktionalisiert sind, insbesondere mit Alkanen, Alkenen, Aromaten, Aldehyden, Ketonen und/oder Ethern.

10. Substrat nach einem der Ansprüche 1 bis 9,
**dadurch gekennzeichnet,**
**dass** das Silikonharz wenigstens einen Phenyl- und/oder Vinylrest aufweist.

11. Substrat nach einem der Ansprüche 1 bis 10,
**dadurch gekennzeichnet,**
**dass** die mittlere Schichtdicke der von dem Beschichtungsmaterial gebildeten Beschichtung im Bereich zwischen 1-20 µm, bevorzugt zwischen 2-10 µm, besonders bevorzugt zwischen 4-8 µm beträgt.

12. Substrat nach einem der Ansprüche 1 bis 11,
**dadurch gekennzeichnet,**
**dass** die Transmission des semitransparenten, beschichteten Substrates im Wellenlängenbereich von 380 nm - 630 nm zwischen ≥ 0 % bis 20 %, bevorzugt ≥ 0 % bis 10 % liegt.

13. Substrat nach einem der Ansprüche 1 bis 12,
**dadurch gekennzeichnet,**
**dass** der LAB-Wert der Beschichtung bei Aufsicht durch das Substrat hindurch im Bereich zwischen L = 22 - 27, a = -1,0 bis 1,0; b = -2,0 bis -0,5 beträgt, oder dass der LAB-Wert der Beschichtung bei Aufsicht durch das Substrat hindurch im Bereich zwischen L = 60 - 90, a = -1,5 bis -1,0; b = 5,0 bis 8,0 beträgt.

14. Substrat nach einem der Ansprüche 1 bis 13,
**dadurch gekennzeichnet,**
**dass** die optische Streuung der Beschichtung im Bereich zwischen 0 - 2,5 %

## Claims

1. Substrate having a semi-transparent coating formed of a coating material,
where the substrate is at least partly transparent and consists of glass or glass-ceramic,
where the coating material comprises a sol-gel matrix, dyes and polyester- and/or epoxy-functionalized silicone resins, more particularly a polyester-modified silicone resin,
and where the optical scattering of the coating is in the range between 0-3.5%.

2. Substrate according to Claim 1, **characterized in that** a metal alkoxide, preferably in the form of alkoxysilanes, more preferably a tetraalkoxysilane, is used as precursor for the sol-gel matrix.

3. Substrate according to Claim 2, **characterized in that** a mixture of tetraethoxysilane and trialkoxysilane is used as precursors for the sol-gel matrix.

4. Substrate according to any of Claims 1 to 3, **characterized in that** the alkoxysilane has an organically crosslinkable functionality, specifically epoxy-, acrylato-, methacrylato-, vinyl- and/or allylsilane.

5. Substrate according to any of Claims 1 to 4, **characterized in that** dyes used are Orasol, especially Orasol RLi, azo dyes, especially methyl orange, alizarin yellow or Congo red, triphenylmethane dye, especially malachite green, eosin, fluorescein, aurin, phenolphthalein, vat dye, especially anthraquinone dyes, indigo and thioindigo, fluorescent dye, perylene dye and/or phthalocyanine.

6. Substrate according to any of Claims 1 to 5, **characterized in that** it comprises organic curing agents and/or crosslinkers which have a plurality of organically crosslinkable groups, preference being given to using bisepoxide and/or bismethacrylate.

7. Substrate according to any of Claims 1 to 6, **characterized in that** the molar ratio of crosslinkable organic silanes to monomer of the curing agent or crosslinker is in the range between 35:1 to 10:1, preferably 25:1 to 15:1.

8. Substrate according to any of Claims 1 to 7, **characterized in that** the sol-gel component exhibits an inorganic and an organic crosslinking.

9. Substrate according to any of Claims 1 to 8, **characterized in that** the silicone resins are functionalized with halogens and/or organic groups, more particularly with alkanes, alkenes, aromatics, aldehydes, ketones and/or ethers.

10. Substrate according to any of Claims 1 to 9, **characterized in that** the silicone resin has at least one phenyl and/or vinyl radical.

11. Substrate according to any of Claims 1 to 10, **characterized in that** the mean film thickness of the coating formed of the coating material is in the range between 1-20 µm, preferably between 2-10 µm, more preferably between 4-8 µm.

12. Substrate according to any of Claims 1 to 11, **characterized in that** the transmission of the semi-transparent, coated substrate in the wavelength range of 380 nm - 630 nm is between ≥ 0% to 20%, preferably ≥ 0% to 10%.

13. Substrate according to any of Claims 1 to 12, **characterized in that** the LAB value of the coating when observed through the substrate is in the range between L = 22-27, a = -1.0 to 1.0; b = -2.0 to -0.5, or **in that** the LAB value of the coating when observed through the substrate is in the range between L = 60-90, a = -1.5 to -1.0; b = 5.0 to 8.0.

14. Substrate according to any of Claims 1 to 13, **characterized in that** the optical scattering of the coating is in the range between 0-2.5%.

## Revendications

1. Substrat comprenant un revêtement semi-transparent, qui est formé par un matériau de revêtement,
le substrat étant au moins partiellement transparent, et étant constitué par du verre ou de la vitrocéramique,
le matériau de revêtement comprenant une matrice sol-gel, des colorants et des résines de silicone à fonctionnalisation polyester et/ou époxy, notamment une résine de silicone à modification polyester, et la dispersion optique du revêtement étant dans la plage comprise entre 0 et 3,5 %.

2. Substrat selon la revendication 1, **caractérisé en ce qu'**un alcoolate de métal, de préférence sous la forme d'alcoxysilanes, de manière particulièrement préférée un tétraalcoxysilane, est utilisé en tant que précurseur pour la matrice sol-gel.

3. Substrat selon la revendication 2, **caractérisé en ce qu'**un mélange de tétraéthoxysilane et de trialcoxysilane est utilisé en tant que précurseur pour la matrice sol-gel.

4. Substrat selon l'une quelconque des revendications 1 à 3, **caractérisé en ce que** l'alcoxysilane comprend une fonctionnalité organique réticulable, à savoir un époxy-, acrylate-, méthacrylate-, vinyl- et/ou allylsilane.

5. Substrat selon l'une quelconque des revendications 1 à 4, **caractérisé en ce que** l'orasol, notamment l'orasol RLi, des colorants azoïques, notamment le méthylorange, le jaune d'alizarine ou le rouge congo, un colorant triphénylméthane, notamment le vert de malachite, l'éosine, la fluorescéine, l'aurine, la phénolphtaléine, un colorant de cuve, notamment des colorants anthraquinone, l'indigo et le thioindigo, un colorant fluorescent, un colorant pérylène et/ou la phtalocyanine sont utilisés en tant que colorants.

6. Substrat selon l'une quelconque des revendications 1 à 5, **caractérisé en ce qu'**il comprend des agents de durcissement et/ou des agents de réticulation organiques, qui comprennent plusieurs groupes organiques réticulables, un bisépoxyde et/ou un bisméthacrylate étant utilisés de préférence.

7. Substrat selon l'une quelconque des revendications 1 à 6, **caractérisé en ce que** le rapport molaire entre les silanes organiques réticulables et le monomère de l'agent de durcissement ou de l'agent de réticulation se situe dans la plage allant de 35:1 et 10:1, de préférence de 25:1 à 15:1.

8. Substrat selon l'une quelconque des revendications 1 à 7, **caractérisé en ce que** la fraction sol-gel comprend une réticulation inorganique et une réticulation organique.

9. Substrat selon l'une quelconque des revendications 1 à 8, **caractérisé en ce que** les résines de silicone sont fonctionnalisées avec des halogènes et/ou des groupes organiques, notamment avec des alcanes, des alcènes, des composés aromatiques, des aldéhydes, des cétones et/ou des éthers.

10. Substrat selon l'une quelconque des revendications 1 à 9, **caractérisé en ce que** la résine de silicone comprend au moins un radical phényle et/ou vinyle.

11. Substrat selon l'une quelconque des revendications 1 à 10, **caractérisé en ce que** l'épaisseur de couche moyenne du revêtement formé par le matériau de revêtement se situe dans la plage allant de 1 à 20 µm, de préférence de 2 à 10 µm, de manière particulièrement préférée de 4 à 8 µm.

12. Substrat selon l'une quelconque des revendications 1 à 11, **caractérisé en ce que** la transmission du substrat semi-transparent revêtu dans la plage de longueurs d'onde allant de 380 nm à 630 nm est de ≥ 0 % à 20 %, de préférence de ≥ 0 % à 10 %.

13. Substrat selon l'une quelconque des revendications 1 à 12, **caractérisé en ce que** la valeur LAB du revêtement au travers du substrat est dans la plage de L = 22 à 27, a = -1,0 à 1,0, b = -2,0 à -0,5, ou **en ce que** la valeur LAB du revêtement au travers du substrat est dans la plage de L = 60 à 90, a = -1,5 à -1,0, b = 5,0 à 8,0.

14. Substrat selon l'une quelconque des revendications 1 à 13, **caractérisé en ce que** la dispersion optique du revêtement se situe dans la plage allant de 0 à 2,5 %.
